# EUROPÄISCHE PATENTSCHRIFT

(11) **EP 1 950 820 B1**
(45) Veröffentlichungstag und Bekanntmachung des Hinweises auf die Patenterteilung: **04.08.2010**
(21) Anmeldenummer: 08075078.9
(22) Anmeldetag: 29.01.2008
(51) Int. Cl.: H01M 2/10, A43B 7/00

(54) **Akkumulatorpack**
Battery pack
Cartouche d'accumulateur

(30) Priorität: 29.01.2007 DE 102007005226
(43) Veröffentlichungstag der Anmeldung: 30.07.2008
(73) Patentinhaber: THERM-IC Products GmbH Nfg. & Co. KG, 8200 Gleisdorf (AT)
(72) Erfinder: Kremer, Gerhard, 8280 Fürstenfeld (AT); Macher, David, 8570 Voitsberg (AT)
(74) Vertreter: Pfenning, Meinig & Partner GbR

(56) Entgegenhaltungen:
- EP-A- 1 293 140
- FR-A- 2 842 946
- US-A- 2 692 326
- US-A- 5 445 900
- US-A1- 2006 201 025
- US-A1- 2006 208 695

## Beschreibung

Die Erfindung betrifft einen Akkumulatorpack zur Versorgung von elektrischen Geräten oder Bauelementen, insbesondere von Heizelementen nach dem Oberbegriff des Hauptanspruchs.

Es ist bekannt, Batterien bzw. aufladbare Batterien als Spannungsversorgung beispielsweise für Heizelemente, die beispielsweise in beheizbaren Sohlen angeordnet sind, einzusetzen. Die Batterien sind in starren Gehäusen aufgenommen, wobei ein Austausch der Batterien relativ unbequem und aufwendig ist. Außerdem ist das Gehäuse starken mechanischen Beanspruchungen unterworfen, was zu Schäden führen kann.

Der Erfindung liegt die Aufgabe zugrunde, einen Akkumulatorpack zu schaffen, der gegen mechanische und witterungsbedingte Einflüsse geschützt ist und ein leichtes Wechseln der Batterien bei sicherer Halterung derselben gestattet.

Diese Aufgabe wird erfindungsgemäß durch die kennzeichnenden Merkmale des Hauptanspruchs in Verbindung mit den Merkmalen des Oberbegriffs gelöst. Durch die in den Unteransprüchen angegebenen Merkmale sind vorteilhafte Weiterbildungen und Verbesserungen möglich.

Dadurch, dass der Akkumulatorpack ein Gehäuse aufweist, das eine zu einer Seite offenen Gehäuseschale mit einer die Steuerschaltung aufnehmenden aufgesetzten Gehäusekappe sowie eine die Gesamtheit aus Gehäuseschale und -kappe umgreifende Hülle umfasst, wird ein Akkumulatorpack zur Verfügung gestellt, der vor mechanischen und witterungsbedingten Einflüssen geschützt ist. Dabei dient die Hülle als Batteriedeckel zum Abschließen der offenen Gehäuseschale und eben als Schutzhülle vor den genannten Einflüssen. Die Hülle ist leicht von der Gehäuseschale abziehbar, wodurch ein leichtes Wechseln der Batterie möglich ist, die im Betriebszustand trotzdem sicher an ihrem Platz durch die Hülle gehalten werden.

Die Hülle kann starr oder auch flexibel, z.B. aus einem Elastomer bestehend ausgebildet sein.

Durch eine an der offenen Seite vorgesehene umlaufende Überkragung wird die flexible Hülle durch Übergreifen des Randes der Kappe sicher festgelegt.

Bei einer nicht flexiblen Hülle, z.B. aus einem stoßfesten Kunststoff, sind vorzugsweise im Bereich der offenen Seite bzw. des Randes Rast- oder Schnappelemente vorgesehen, die den Rand der Kappe übergreifen oder mit entsprechenden Elementen an der Kappe in Eingriff treten.

Besonders vorteilhaft ist, dass die Kontaktierung der Batterien, die in an sich bekannter Weise aus plattenförmigen und federnden Kontaktelementen bestehen, derart ausgebildet ist, dass die federnden Kontaktelemente alle auf einer Seite der Batterien angeordnet sind, während die plattenförmigen Kontaktelemente auf der anderen Seite vorgesehen sind. Dabei sind die Kontakte auf der beim bestimmungsgemäßen Gebrauch oberen Seite des Akkupacks vorgesehen, so dass bei senkrechten Stößen, wie sie beispielsweise bei Verwendung des Akkupacks an Schuhen auftreten, die Kontaktfedern elastisch nachgeben und die Spannungsversorgung im Wesentlichen unterbrechungsfrei aufrechterhalten wird.

Vorteilhafterweise ist das Gehäuse mit flexibler Hülle und Kappe als flacher gewölbter Quader mit abgerundeten Ecken ausgebildet, wobei die gewölbte Form des Akkupacks sich besonders gut für den Einsatz an Schuhen eignet und die abgerundeten Formen verhindern ein Festhaken und Beschädigen von Bekleidungstextilien.

In einer bevorzugten Ausführungsform ist die Steuerschaltung mit einer Kurzschlussschutzschaltung ausgerüstet, so dass sich im Falle eines Kurzschlusses am Heizelement oder den Ausgangssteckern des Akkupacks dieses sich abschaltet und die Beschädigung der Elektronik bzw. der Akkus verhindert.

Besonders vorteilhaft ist, dass in einem nicht flüchtigen Speicher der jeweils aktuelle Betriebszustand bzw. der sich verändernde Betriebszustand gespeichert wird. Sollte es durch extreme mechanische Stoss-Belastungen zur kurzzeitigen Unterbrechung der Betriebsspannung kommen, läuft die Spannungsversorgung danach wieder im zuletzt gespeicherten Betriebszustand weiter, d.h., das Akkupack steht dem Anwender in seiner Funktion ungestört zur Verfügung.

Ein Ausführungsbeispiel der Erfindung ist in der Zeichnung dargestellt und wird in der nachfolgenden Beschreibung näher erläutert. Es zeigen
- Fig. 1: eine perspektivische schematische Ansicht des erfindungsgemäßen Akkumulatorpacks ohne Hülle,
- Fig. 2: den erfindungsgemäße Akkumulatorpack mit Hülle in perspektivischer Darstellung, und
- Fig. 3: eine perspektivische Teilansicht auf eine starre Hülle mit Rastelement.

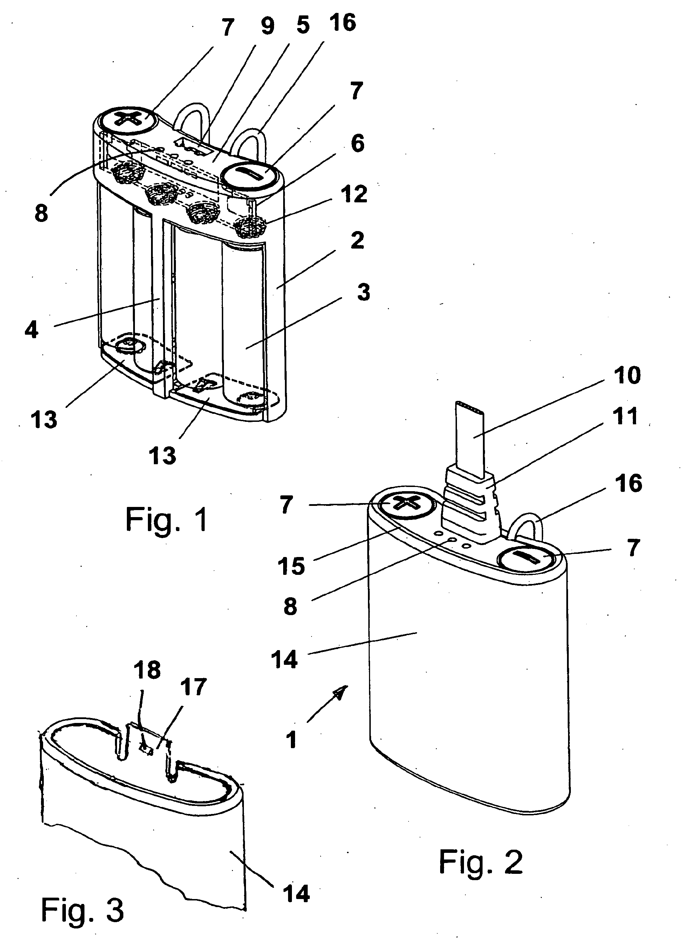

Der erfindungsgemäße Akkupack weist grundsätzlich eine Rechteckquaderform mit abgerundeten Ecken auf und ist in der Darstellung nach Fig. 1 nach vorn hin leicht gewölbt. Die Grundstruktur des Gehäuses wird durch eine Gehäuseschale 2 geliefert, die im Ausführungsbeispiel 4 aufladbare Batterien 3 parallel nebeneinander liegend aufnehmen kann, wobei die Gehäuseschale 2 nach vorn hin (in Fig. 1) offen ist und ein in Längsrichtung sich erstreckender Steg 3 der Schale 2 die notwendige Steifigkeit verleiht. Durch die vorderen Öffnungen können die Batterien leicht ausgewechselt bzw. eingesetzt werden.

Auf die Gehäuseschale 2 ist eine Gehäusekappe 5 aufgesteckt, die eine zur Steuerung der Spannungsabgabe des Batteriepacks 1 vorgesehene Steuerschaltung aufnimmt, wobei hier lediglich symbolisch eine Leiterplatte 6 gestrichelt dargestellt ist. Weiterhin sind in der Kappe 5 zwei als Taster 7 ausgebildete Schalter angeordnet, die elektrisch mit der Steuerschaltung verbunden sind. Schließlich sind LEDs als Anzeigeelemente 8 für den jeweiligen Spannungszustand und eine Buchse 9 für die Aufnahme eines mit einer elektrischen Leitung 10 versehenen Steckers 11 vorgesehen, die ebenfalls elektrisch mit den entsprechenden elektronischen Bauelementen auf der Leiterplatte 6 verbunden sind.

Die Batterien stehen mit an sich bekannten Kontaktelementen 12, 13 in Verbindung, wobei, anders als an sich bekannt, an der Seite der Leiterplatte 6 die Kontaktelemente 12 alle als Federn ausgebildet sind, und vorzugsweise mit der Leiterplatte verbunden sind und an der entgegengesetzten Seite zwei plattenförmige Kontaktelemente 13 angeordnet sind. Die notwendigen Verbindungen zwischen zwei Kontaktelementen 12 werden über Leitungen auf der Leiterplatte 6 realisiert. Die federnde Kontaktelemente 12 nehmen mit ihrer Elastizität senkrechte Stöße auf und halten bei diesen Stößen den elektrischen Kontakt aufrecht.

In Fig. 2 ist der Akkupack 1 im zusammengebauten Zustand dargestellt, d.h., über die Gehäuseschale 2 wird eine Hülle 14 gesetzt, die an einer Schmalseite offen ist. Am Rand dieser Öffnung ist die Hülle 14, mit einer umlaufenden Überkragung 15 versehen, die im zusammengebauten Zustand die Kanten der oberen Fläche der Kappe 5 übergreift. Auf diese Weise wird die Hülle 14, die in diesem Fall flexible ist und aus einem Elastomer hergestellt sein kann und in unterschiedlichen Farben vorgesehen werden kann, an der Gesamtheit aus Gehäuseschale 2 und Gehäusekappe 5 festgelegt. In einem anderen Ausführungsbeispiel weist die Gehäuseschale 2 im oberen Bereich bzw. am oberen Rand der Gehäuseklappe eine umlaufende leichte Verdickung auf, die sich mit der in diesem Fall relativ starren aber etwas nachgiebigen Hülle 14 aus einem stofffesten Kunststoff verklemmt. Zusätzlich kann, wie in Fig. 3 dargestellt ist, die relativ starre Hülle 14 eine flexible Lasche 17 mit einem Rastelement 18 aufweisen, das mit einer nicht dargestellten Rastausnehmung in der Gehäuseschale 2 zusammenarbeitet. Weiterhin ist im Boden der Hülle 14 ein Durchbruch (nicht dargestellt) vorgesehen, durch den von unten her ein Druck auf die Gehäuseschale 2 zur Erleichterung des Lösens der Verrastung zwischen Gehäuseschale 2 und Hülle 14 ausgeübt werden kann.

Um den Akkupack 1 beispielsweise an Schuhen befestigen zu können ist eine Klammer 16 mit der Gehäusekappe 5 und/oder der Gehäuseschale 2 verbunden, so dass der Akkupack 1 beispielsweise unter Spannung an dem Rand des Schuhs aufgeklammert werden kann.

Im Betrieb beispielsweise zum Aufheizen einer mit elektrischen Heizelementen versehenen Sohle, die in Schuhe eingelegt sind, werden die Heizelemente über die elektrische Leitung 10 und den Stecker 11 bzw. der Buchse 9 mit einer Steuerschaltung verbunden, die die Energie für das jeweilige Heizelement über eine Impulssteuerung abgibt. Dazu ist die Steuerschaltung, die beispielsweise als Mikrocontroller ausgebildet sein kann, derart aufgebaut, dass drei Heizstufen vorgesehen sind, die über die Taster 7 eingestellt und über die LEDs 8 angezeigt werden können. Vorzugsweise sieht die Steuerung vor, dass beim anfänglichen Aktivieren der Stufe 1 oder 2 für kurze Zeit die dritte Stufe, die die mit der höchsten Betriebsspannung ist, eingestellt wird, wonach wieder automatisch auf die gewählte Stufe umgeschaltet wird. Dadurch wird die Betriebstemperatur in wesentlich kürzerer Zeit erreicht.

Weiterhin ist für den Fall eines Kurzschlusses am Heizelement oder an der Buchse 9 z.B. durch einen metallischen Gegenstand von außen eine Schutzschaltung vorgesehen. Diese Schutzschaltung, die gleichfalls im integrierten Mikrocontroller implementiert sein kann, überwacht kontinuierlich die abgegebene Batterieleistung, und falls diese einen vorbestimmten Schwellenwert überschreitet, schaltet sich der Akkupack ab und verhindert die Beschädigung der Elektronik bzw. der Batterien 3. Die Steuerschaltung beinhaltet außerdem einen nichtflüchtigen Speicher, der den aktuellen Betriebszustand bzw. den jeweils geänderten Betriebszustand speichert. Falls es zu einer kurzen Unterbrechung der Betriebsspannung, beispielsweise durch einen extremen mechanischen Stoß, bei dem sich die federnden Kontakte 12 doch kurzzeitig abheben, wird der zuletzt gespeicherte Betriebszustand nach der Beendigung der Unterbrechung verwendet und das Heizelement wird in seiner Funktion durch die unterbrochene Spannungsversorgung nicht oder unwesentlich beeinträchtigt.

## Patentansprüche

1. Akkumulatorpack zur Versorgung von elektrischen Bauelementen, insbesondere Heizelementen, mit einer Mehrzahl von in einem Gehäuse aufgenommenen aufladbaren Batterien und einer Steuerschaltung zum Steuern der abzugebenden Spannung, **dadurch gekennzeichnet, dass** das Gehäuse eine zu einer Seite offenen Gehäuseschale (2) mit einer die Steuerschaltung aufnehmenden aufgesetzten Gehäusekappe (5) aufweist und dass die Gesamtheit aus Gehäuseschale (2) und -kappe (5) von einer Hülle (14) umgeben ist.

2. Akkumulatorpack nach Anspruch 1, **dadurch gekennzeichnet, dass** die Hülle (14) einseitig offen ist und an der offenen Seite eine umlaufende Überkragung (15) oder mindestens ein Rastvorsprung oder -element aufweist, die (der) den Rand der Stirnseite der Kappe (5) übergreift oder das mit einem korrespondierenden Rastelement im Bereich der Gehäusekappe zusammenarbeitet.

3. Akkumulatorpack nach einem der Ansprüche 1 bis 2, **dadurch gekennzeichnet, dass** an der Stirnseite der Kappe (5) Bedienelemente (7) zum Steuern der abzugebenden Spannung und/oder Anzeigeelemente (8) zum Anzeigen der abgegebenen Spannung sowie eine Steckereinrichtung (9) für den Anschluss an das elektrische Bauelement angeordnet sind.

4. Akkumulatorpack nach einem der Ansprüche 1 bis 3, **dadurch gekennzeichnet, dass** für die Kontaktierung der Batterien (3) plattenförmige und federnde metallische Kontaktelemente (12, 13) vorgesehen sind, wobei die federnden Kontaktelemente (12) auf der Seite der Kappe (5) und die plattenförmigen Kontaktelemente (13) auf der der Kappe (5) abgewandten Seite vorgesehen sind.

5. Akkumulatorpack nach Anspruch 4, **dadurch gekennzeichnet, dass** die federnden Kontaktelemente (12) an einer Leiterplatte (6) angebracht, die die Steuerschaltung trägt und die in der Kappe (5) aufgenommen ist.

6. Akkumulatorpack nach einem der Ansprüche 1 bis 5, **dadurch gekennzeichnet, dass** eine Kurzschluss-Schutzschaltung zur Überwachung des Batteriestroms vorgesehen ist, die ausgebildet ist, bei Überschreiten eines Schwellenwertes die Batteriespannung abzuschalten.

7. Akkumulatorpack nach einem der Ansprüche 1 bis 6, **dadurch gekennzeichnet, dass** die Steuerschaltung einen nicht flüchtigen Speicher aufweist, der ausgebildet ist, jeweils den Betriebszustand zu speichern und bei kurzzeitigen Unterbrechungen der Betriebsspannung die Werte des jeweils zuletzt gespeicherten Betriebszustands nach der Unterbrechung zu liefern.

8. Akkumulatorpack nach einem der Ansprüche 1 bis 7, **dadurch gekennzeichnet, dass** das Gehäuse mit Hülle (14), Gehäuseschale (2) und Kappe (5) eine gewölbte Rechteckform mit abgerundeten Ecken aufweist.

9. Akkumulatorpack nach einem der Ansprüche 1 bis 8, **dadurch gekennzeichnet, dass** die Bedienelemente als Taster (7) ausgebildet sind und jeweils mit der Steuereinrichtung zur Erhöhung und Verringerung der abgegebenen Leistung verbunden sind.

10. Akkumulatorpack nach einem der Ansprüche 1 bis 9, **dadurch gekennzeichnet, dass** das Gehäuse mit einem Bügel (16) zum Festklemmen versehen ist.

11. Akkumulatorpack nach einem der Ansprüche 1 bis 10, **dadurch gekennzeichnet, dass** die Steuerschaltung und gegebenenfalls die Kurzschluss-Schutzschaltung zumindest teilweise als Mikrocontroller ausgebildet sind.

## Claims

1. A battery pack for supplying electrical components, in particular heating elements, with a plurality of chargeable batteries held in a housing and a control circuit for controlling the voltage to be emitted, **characterised in that** the housing has a housing shell (2) which is open on one side, with a housing cap (5) placed on top which receives the control circuit, and **in that** the entire unit consisting of housing shell (2) and cap (5) is surrounded by a covering (14).

2. A battery pack according to Claim 1, **characterised in that** the covering (14) is open on one side and on the open side has a circumambient projecting edge (15) or at least one catch projection or element which extends over the edge of the end face of the cap (5) or which cooperates with a corresponding catch element in the region of the housing cap.

3. A battery pack according to one of Claims 1 to 2, **characterised in that** operating elements (7) for controlling the voltage to be emitted and/or display elements (8) for displaying the voltage emitted and also a plug means (9) for connection to the electrical component are arranged on the end face of the cap (5).

4. A battery pack according to one of Claims 1 to 3, **characterised in that** plate-shaped and resilient metal contact elements (12, 13) are provided for contacting the batteries (3), the resilient contact elements (12) being provided on the side of the cap (5) and the plate-shaped contact elements (13) on the side remote from the cap (5).

5. A battery pack according to Claim 4, **characterised in that** the resilient contact elements (12) are attached to a printed circuit board (6) which bears the control circuit and which is housed in the cap (5).

6. A battery pack according to one of Claims 1 to 5, **characterised in that** a short-circuit protection circuit for monitoring the battery current is provided which is designed to switch off the battery voltage upon the exceeding of a threshold value.

7. A battery pack according to one of Claims 1 to 6, **characterised in that** the control circuit has a non-volatile memory which is designed each time to store the operating condition and, if the operating voltage is briefly interrupted, to supply the values of the last stored operating condition in each case after the interruption.

8. A battery pack according to one of Claims 1 to 7, **characterised in that** the housing with covering (14), housing shell (2) and cap (5) has a curved rectangular shape with rounded edges.

9. A battery pack according to one of Claims 1 to 8, **characterised in that** the operating elements are designed as switch-keys (7) and in each case are connected to the control means for increasing and reducing the power emitted.

10. A battery pack according to one of Claims 1 to 9, **characterised in that** the housing is provided with a stirrup piece (16) for clamping in place.

11. A battery pack according to one of Claims 1 to 10, **characterised in that** the control circuit and optionally the short-circuit protection circuit are formed at least in part as microcontrollers.

## Revendications

1. Ensemble accumulateur destinée à alimenter des composants électriques, en particulier des éléments chauffants, avec une pluralité de batteries rechargeables logées dans un boîtier et un circuit de commande pour commander la tension à délivrer, **caractérisé en ce que** le boîtier présente une coque de boîtier (2) ouverte sur un côté, comprenant un capuchon de boîtier (5) appliqué par-dessus et recevant le circuit de commande et **en ce que** l'ensemble constitué de la coque (2) et du capuchon (5) de boîtier est entouré d'une enveloppe (14).

2. Ensemble accumulateur selon la revendication 1, **caractérisé en ce que** l'enveloppe (14) est ouverte d'un côté et présente sur le côté ouvert un rebord périphérique (15) ou au moins une saillie ou un élément d'arrêt, qui recouvre le bord du côté frontal du capuchon (5) ou qui coopère avec un élément d'arrêt correspondant dans la zone du capuchon de boîtier.

3. Ensemble accumulateur selon l'une quelconque des revendications 1 à 2, **caractérisé en ce que** sont agencés, sur le côté frontal du capuchon (5), des éléments de commande (7) pour commander la tension à délivrer et/ou des éléments d'affichage (8) pour afficher la tension délivrée, ainsi qu'un dispositif connecteur (9) pour la connexion au composant électrique.

4. Ensemble accumulateur selon l'une quelconque des revendications 1 à 3, **caractérisé en ce qu'**il est prévu, pour la mise en contact des batteries (3), des éléments de contact (12, 13) métalliques en forme de plaque et élastiques, les éléments de contact élastiques (12) étant aménagés du côté du capuchon (5) et les éléments de contact (13) en forme de plaque étant aménagés du côté opposé au capuchon (5).

5. Ensemble accumulateur selon la revendication 4, **caractérisé en ce que** les éléments de contact élastiques (12) sont fixés à une carte imprimée (6) qui porte le circuit de commande et est logée dans le capuchon (5).

6. Ensemble accumulateur selon l'une quelconque des revendications 1 à 5, **caractérisé en ce qu'**il est prévu pour surveiller le courant des batteries un circuit de protection contre les courts-circuits , qui est conçu pour couper la tension des batteries lorsqu'une valeur de seuil est dépassée.

7. Ensemble accumulateur selon l'une quelconque des revendications 1 à 6, **caractérisé en ce que** le circuit de commande présente une mémoire non volatile qui est conçue pour enregistrer respectivement l'état de fonctionnement et, en cas de brèves interruptions de la tension de service, pour fournir après l'interruption les valeurs de l'état de fonctionnement respectif enregistré en dernier lieu.

8. Ensemble accumulateur selon l'une quelconque des revendications 1 à 7, **caractérisé en ce que** le boîtier comprenant l'enveloppe (14), la coque de boîtier (2) et le capuchon (5) présente une forme rectangulaire bombée à coins arrondis.

9. Ensemble accumulateur selon l'une quelconque des revendications 1 à 8, **caractérisé en ce que** les éléments de commande se présentent sous la forme de boutons-poussoirs (7) et sont connectés respectivement au dispositif de commande pour augmenter et diminuer la puissance délivrée.

10. Ensemble accumulateur selon l'une quelconque des revendications 1 à 9, **caractérisé en ce que** le boîtier est équipé d'un crochet (16) pour sa fixation.

11. Ensemble accumulateur selon l'une quelconque des revendications 1 à 10, **caractérisé en ce que** le circuit de commande et éventuellement le circuit de protection en cas de court-circuit se présentent au moins en partie sous la forme de microcontrôleurs.
